# EUROPÄISCHE PATENTSCHRIFT

(11) **EP 0 746 165 B1**
(45) Veröffentlichungstag und Bekanntmachung des Hinweises auf die Patenterteilung: **12.07.2006**
(21) Anmeldenummer: 96108693.1
(22) Anmeldetag: 31.05.1996
(51) Int. Cl.: H04N 9/64, H04N 5/46

(54) **Einrichtung mit einer abstimmbaren Empfängerschaltung zum Empfang von analogen und/oder digitalen Fernsehsignalen**
Apparatus comprising a tunable receiver circuit for receiving analogue and/or digital television signals
Dispositif de réception de signaux de télévision analogiques et/ou numériques avec un circuit de réception accordable

(30) Priorität: 02.06.1995 DE 19520281
(43) Veröffentlichungstag der Anmeldung: 04.12.1996
(73) Patentinhaber: LOEWE OPTA GmbH, 96317 Kronach (DE)
(72) Erfinder: Schaas, Gerhard, Dipl.-Ing., 96472 Rödental (DE)

(56) Entgegenhaltungen:
- EP-A- 0 574 901
- US-A- 5 192 999
- IEEE TRANSACTIONS ON CONSUMER ELECTRONICS, Bd. 40, Nr. 3, August 1994, NEW YORK, US, Seiten 711-716, XP000471240 GILLIES & AL.: "combined tv format control and sampling rate conversion ic"
- IEEE 1993 INTERNATIONAL CONFERENCE IN CONSUMER ELECTRONICS, DIGEST OF TECHNICAL PAPERS, 8. - 10.Juni 1993, ROSEMONT, US, Seiten 324-325, XP000427635 OTOBE & AL.: "developmemt and conditions of an hdtv multimedia system"
- PATENT ABSTRACTS OF JAPAN vol. 17, no. 383 (E-1400), 19.Juli 1993 & JP 05 064203 A (SONY), 12.März 1993, & US 5 436 675 A (HAYASHI & AL.)

## Beschreibung

Die Erfindung betrifft eine Einrichtung mit einer abstimmbaren Empfängerschaltung zum Empfang von analogen und/oder digitalen Fernsehsignalen, die terrestrisch, über Kabel oder Satellit verteilt werden, mit den im Oberbegriff des Anspruchs angegebenen Merkmalen.

Ein Fernsehempfangsgerät der gattungsgemäßen Art ist aus der EP 0 574 901 A2 bekannt. Dieser Empfänger weist einen Bildsignalprozessor auf, der verschiedene decodierte Bildsignale, die empfangen werden, zu verarbeiten vermag, insbesondere auch eine Konvertierung emöglicht.

Aus der IEEE 1993, Heft 3, Seiten 324 - 325, ist ein HDTV-Multimedia-System mit einem Signalprozessor bekannt, der verschiedene Bildformate abzuarbeiten vermag, so MUSE, NTSC und CG (Computer Graphics). Die Signalverarbeitung setzt dabei einen Empfänger für die wahlweise Einspeisung eines analogen und/oder digitalen Fernsehsignals voraus.

Aus der Fachzeitschrift "Funkschau", 11/1995, Seiten 62 bis 65, sind verschiedene sogenannte Set-Top-Boxen bekannt, die Empfänger für das digitale Fernsehen sind und als Beistellboxen zu Fernsehempfangsgeräten herkömmlicher Art betrieben werden. Mit solchen Set-Top-Boxen ist es möglich, die nach dem MPEG 2-Standard übertragenen digitalen Signale von einem Satelliten oder einem Kabel zu empfangen, aufzubereiten und für die Darstellung über einen Ausgang einem Fernsehgerät zuzuführen, um die Bilder auf dem Fernsehbildschirm neben den mit dem Fernsehempfänger empfangbaren terrestrisch verteilten Sendungen und/oder über Satellit empfangenen analogen Sendungen darstellen zu können. Dabei sind Set-Top-Boxen, die zwei Scart-Anschlüsse, ein PCMCIA-Interface und eine serielle RS 232-Schnittstelle aufweisen sowie Chipkartenleser, die nach ISO 7816 ausgestattet sind, bekannt. Entsprechend den Empfangsmöglichkeiten über die verschiedenen Satelliten sind die Empfängerschaltungen diesen Frequenzbereichen angepaßt. Darüber hinaus weisen einige Set-Top-Boxen auch Empfänger für digitalen Kabelempfang mit Signalen per 64 QAM (Quadratur-Amplituden-Modulation) auf, die auf den Frequenzen 47 bis 860 MHz empfangen werden können. Die Satellitenempfänger gestatten den Empfang von QPSK-modulierten Signalen (Quadratur-Phasen-Umtastung) im Frequenzbereich von 950 bis 2050 MHz bzw. 2150 MHz gemäß den gegenwärtigen Festlegungen.

Die bekannten Set-Top-Boxen sind für den Anschluß an einen Monitor oder ein Fernsehgerät ausgelegt und weisen die dazu benötigten Schnittstellen für die modulierte oder unmodulierte direkte RGB- oder FBAS-Einspeisung auf, zu welchem Zweck die digitalen Signale größtenteils umgesetzt werden müssen. Der Einsatz in Verbindung mit einem Personal Computer ist ebenfalls möglich, wenn der PC mit einer Videokarte ausgestattet ist und die Signale von der Set-Top-Box in solche umgesetzt werden, die von der Videoplatte verarbeitet werden können. Die bekannten Set-Top-Boxen sind aber nicht geeignet und nicht dafür ausgelegt, um Videosignale derart umzusetzen, daß sie mit doppelter Zeilenzahl als die empfangene Zeilenzahl auf dem Bildschirm zur Erreichung einer höheren Auflösung dargestellt werden können. Ferner sind die Set-Top-Boxen nicht geeignet und nicht dafür ausgelegt, von einem PC empfangene Signale auf dem Bildschirm, z.B. dem Bildschirm eines Fernsehgerätes, darzustellen. Hierfür bedarf es gesonderter Kartensysteme. Auch läßt sich sich im Falle der Verwendung einer Set-Top-Box in Verbindung mit einem PC dieser nicht parallel über eine Infrarotbedienung oder mittels eines Steuerbusses von dem PC aus steuern. Ebenso ist es stets erforderlich, daß sowohl der PC als auch der angeschlossene Fernseher oder Monitor gesondert eingeschaltet werden muß, um im Verbund die empfangenen Signale darstellen zu können. Dies hat den Nachteil, daß immer mehrere Netzschalter benutzt und darüber hinaus redundant solche Schalter vorgesehen sein müssen.

Aus der Fachzeitschrift Funkschau, Heft 11/1987, Seiten 42 bis 45, ist es bekannt, bei Fernsehgeräten in digitaler Technik einen zweiten Videoanschluß vorzusehen und die Bildfrequenz zu verdoppeln. Ferner ist es aus der Fachzeitschrift Radio Fernsehen Elektronik, Heft 8/1991, Seiten 461/462, bekannt, einen Umschalter für die Einspeisung von Videoquellen an zwei Scart-Eingängen eines Fernsehempfängers oder Videorecorders vorzusehen, über den gleichzeitig auch die Audioquellen entsprechend geschaltet werden. Weiterhin ist es aus der Funkschau, Heft 21/1994, Seiten 26 bis 34, bekannt, eine PC-Einsteckkarte als Fernsehkarte auszubilden, die einen Satellitenreceiver aufweist.

Ausgehend von dem angegebenen Stand der Technik liegt der Erfindung die Aufgabe zugrunde, eine Einrichtung der gattungsgemäßen Art so auszubilden, daß sie als universell einsetzbare Set-Top-Box sowohl in Verbindung mit Fernsehempfangsgeräten als auch in Verbindung mit einem Monitor oder einem PC als Koppelglied dazwischen benutzt werden kann, wobei durch geeignete schaltungstechnische Lösungen auf dem Bildschirm eine Wiedergabe der Bilder mit doppelter Zeilenzahl ermöglicht werden soll und auch Bilder von einem PC kommend mit einer bestimmten anderen Zeilenzahl dargestellt werden können.

Die Erfindung löst die Aufgabe durch eine Einrichtung mit den im Anspruch 1 angegebenen Merkmalen.

Vorteilhafte Ausgestaltungsformen der Einrichtung, wie sie im Anspruch 1 angegeben ist, sind in den Unteransprüchen im einzelnen angegeben.

Die erfindungsgemäße Einrichtung gestattet den Einsatz sowohl in Verbindung mit einem klassischen Fernsehgerät als auch in Verbindung mit einem PC, der sogar die Kopplung zwischen beiden ermöglicht, um sowohl analoge als auch digitale Fernseh- und Hörrundfunksignale empfangen und decodieren zu können. Eine integrierte Bussteuerung, z.B. ein I²C-Bus, gestattet dabei die Steuerung der Umschalter und Funktionen über einen gemeinsamen Steuerprozessor. Die einzelnen Schaltungsblöcke sind aber adressierbar oder als eigenständige Prozessoren mit µProzessor und Speicher ausgestattet, um Funktionen zu schalten und den Speicherzustand jeweils aufrechtzuerhalten, bis ein neuer Befehl eine andere Funktion steuert.

Durch die weiterhin vorgesehene Integration eines Netzumschalters kann die Stromversorgung eines angeschlossenen PC oder aber auch eines angeschlossenen Monitors oder Fernsehempfängers direkt mit der Funktionssteuerung der Einrichtung gekoppelt sein. Wird beispielsweise die Funktionseinrichtung durch Betätigen eines Schalters aktiviert, so kann über den intelligenten Netzumschalter mit Spannungsversorgung zugleich der angeschlossene Monitor oder das angeschlossene Fernsehgerät eingeschaltet werden. Ebenso ist auch das Einschalten eines PC möglich bzw. kann die vom PC vorliegende Spannung als Netzstromversorgungsspannung genutzt werden. In diesem Fall ist die Funktion der Einrichtung abhängig von der Funktion des PC. Wird dieser z.B. eingeschaltet, so kann das Gerät über den Netzumschalter ebenfalls eingeschaltet werden und auch darüber der angeschlossene Monitor. Die direkte Netzverbindung wird dabei von der I²C-Bus-Steuerung inaktiv geschaltet.

Im übrigen erfolgt jedoch die Steuerung aller Funktionen über den integrierten Bedienprozessor, welcher nach einem eingeschriebenen Programm in Abhängigkeit von eingegebenen Steuerbefehlen, die über einen Infrarotlicht-Steuereingang eingegeben und detektiert oder aber auch über eine Schnittstellezum PC, z.B. über eine RS 232-Schnittstelle, empfangen werden können, die Funktionsblöcke steuert, so daß eine Funktionskopplung mit dem angeschlossenen Gerät möglich ist. Der integrierte Bedienprozessor kann auch über die Funktion verfügen, die detektierten Infrarotsignale direkt an die RS 232-Schnittstelle weiterzuleiten, um sie z.B. einem PC als Kommandos zu übermitteln. Der PC kann dann mittels eines entsprechenden Programms Steuersequenzen generieren, die über den RS 232-Bus dem Bedienprozessor zugeleitet werden. Auf diese Weise kann z.B. ein PC die Komplettsteuerung der erfindungsgemäßen Einrichtung übernehmen. Über die Schnittstelle kann aber auch die Steuerung von einem angeschlossenen Fernsehgerät her erfolgen, zu welchem Zweck die Signale entsprechend aufgebaut sein müssen. Es ist aber auch möglich, über einen Scart-Anschluß beispielsweise die I²C-Bus-Steuerfunktion zu realisieren, zu welchem Zweck die entsprechenden Befehle an den Prozessor abgegeben werden, der eine zusätzliche Schnittstelle für diesen Bus aufweist, um auch von externen Geräten entsprechende Steuerbefehle empfangen und auswerten zu können.

Mit der Erfindung wird es zugleich möglich, in Verbindung mit einem Multisync-Monitor oder mit einem Fernsehempfangsgerät, das die Darstellung von 100 Hz-Bildern gestattet, die Ansteuerung mit den zugehörigen Synchronimpulsen direkt vornehmen zu können, ohne daß eine Konvertierung in dem Fernsehempfangsgerät selbst vorgenommen werden muß. Dies hat den Vorteil, daß das Adaptionsgerät sowohl in Verbindung mit Fernsehempfangsgeräten als auch mit Multisync-Monitoren eingesetzt werden kann. Die entsprechende Konvertierung wird ebenfalls über den Bedienprozessor gesteuert.

Der Einbau der Einheit nach der Erfindung ist sowohl in ein autarkes Gehäuse als auch in einen Fernsehempfänger möglich, so daß der Fernsehempfänger zu einem multimedialen Gerät wird und auch eine Verbindung zu einem PC hergestellt werden kann. Dadurch ist es möglich, ergänzend zu den PC-Funktionen auch multimediale Femsehfunktionen zu steuern.

Die Erfindung wird nachfolgend anhand des in dem Blockschaltbild dargestellten Ausführungsbeispiels ergänzend erläutert.

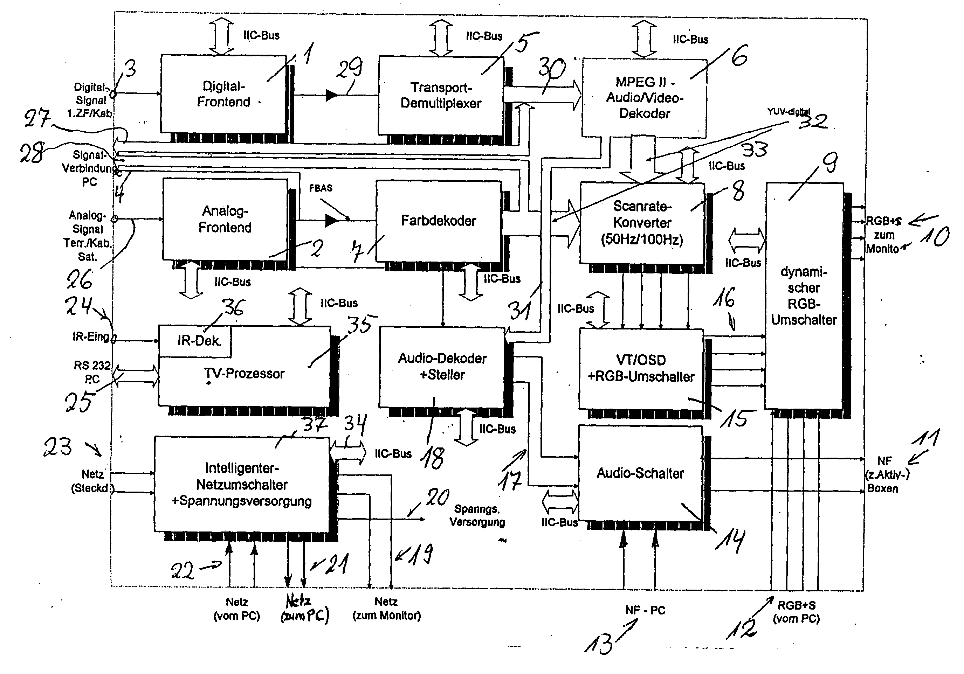

In der einzigen Figur sind in Form eines Blockschaltbildes die Funktionen einer Einrichtung nach der Erfindung dargestellt, wie sie beispielsweise in einem Beistellgerät implementierbar sind.

In dem Blockschaltbild sind die Funktionseinheiten des digitalen Empfängers als Digital-Frontend mit 1, die Funktionseinheit Analog-Frontend mit dem Bezugszeichen 2 gekennzeichnet. An diesen Empfängerschaltungen liegen über einen Digitaleingang 3 die Digitalsignale, z.B. digitale Fernsehsignale der Audiosignale, an, die dem Digital-Frontend zugeführt werden. An der zweiten Empfängerschaltung 2 liegen über den Eingang 26 analoge Signale, z.B. terrestrisch übertragene, über Kabel- oder Satellitenempfänger empfangene Signale an. Die jeweilige Empfängerschaltung beinhaltet alle zum Empfang und zur Abstimmung notwendigen Schaltungseinheiten einschließlich ZF und Demodulator. Dies gilt sowohl für die Empfängerschaltung 1 als auch für die Empfängerschaltung 2, wobei die Empfängerschaltung 1 einen Demodulator aufweist, der zweckmäßigerweise die nach der DVB-Norm übertragenen QPSK-Signale demoduliert, aber auch über Kabel empfangene Signale nach dem QAM-Verfahren zu demodulieren gestattet. Bei dem analogen Frontend 2 handelt es sich um eine Empfängerschaltung mit ZF-Verstärker und Demodulator zum Demodulieren der analogen Fernseh- und/oder Audiosignale.

Gesteuert werden die beiden Funktionseinheiten 1 und 2 über einen I²C-Bus von einem TV-Prozessor, der den Bedienprozessor darstellt. Auch dieser ist Bestandteil der Einheit. Der Bedienteil- bzw. TV-Prozessor 35 steuert darüber hinaus alle anderen Funktionsgruppen der Einheit und beinhaltet ferner einen Infrarot-Befehlsdetektor 36, der die über den Eingang 24 empfangenen und demodulierten Infrarotlicht-Signale auswertet. Der Bedienteilprozessor 35 ist darüber hinaus mit einer externen seriellen Schnittstelle verbunden, über die Bedienbefehle eingegeben aber auch ausgegeben werden können, so daß über die Schnittstelle 25, bevorzugt eine RS 232-Schnittstelle, die Einheit z.B. über einen PC steuerbar ist oder aber auch von dem Bedienteil-Prozessor 35 ein PC steuerbar ist, z.B. durch den nicht dargestellten Infrarot-Fernbedienungsgeber. Der Bedienteil-Prozessor 35 liefert auch die für die Abstimmung notwendigen Abstimmdaten und bewirkt die notwendige Umschaltung zwischen Empfang über Digitalempfänger 1 oder Analogempfänger 2. Darüber hinaus gibt er die entsprechend benötigten Informationen an einen Transport-Demultiplexer 5, der die an der digitalen Empfängerschaltung 1 über die Leitung 29 anliegenden Signale in einer gewünschten Reihenfolge über einen Bus 30 an einen MPEG II-Decoder zur Decodierung der Audio- und Videosignale nach dem DVB-Standard abgibt. Der MPEG II-Decoder 6 wird ebenfalls über einen I²C-Bus von dem TV-Prozessor bzw. Bedienteil-Prozessor 35 gesteuert. Die decodierten Audiosignale, die in digitaler Form anliegen, werden einem Audio-Decoder + Steiler 18 zugeführt. Dieser ist seinerseits mit einem Audio-Schalter 14 gekoppelt, der die decodierten analogen Audiosignale je nach Schalterstellung, die von dem Bedien-Prozessor 35 vorgegeben ist, an den Ausgang 11 anlegt oder aber eine Signalunterbrechungsschaltung vorsieht, damit von außen die über die Schnittstelle 13 eingespeisten NF-Signale an den Ausgang 11 angelegt werden können. Dies ist beispielsweise dann der Fall, wenn das Gerät im Verbund mit einem CD-Player arbeitet und die Tonsignale direkt eingespeist werden, z.B. in Verbindung mit einem PC, wenn von diesem Tonsignale durchgeschleift werden sollen, um sie beispielsweise an Aktivboxen abzugeben, die an den Ausgängen 11 angeschaltet sind. Die vorgesehenen Stereo-Ausgänge können auch noch dupliziert werden. Ebenso ist es möglich, eine Endstufe direkt in der Einheit mit vorzusehen, um einen Lautsprecher bzw. eine Lautsprecherbox direkt anschließen zu können.

Der Audio-Decoder 18 erhält darüber hinaus die von dem Analog-Empfänger 2 aus den abgegebenen FBAS-Signalen im Farbdecoder 7 abgespaltenen Tonsignale und kann auch diese verarbeiten und dem Audio-Schalter zur Verfügung stellen. Zweckmäßigerweise werden sowohl die Analogsignale im Farbdecoder als auch die Tonsignale in Digitalsignale umgesetzt bzw. vorhandene Digitalsignale des Tons in dieser Form weitergegeben und dann von Audio-Decoder gleichermaßen decodiert wie die vom MPEG II-Decoder anliegenden Tonsignale. Die Steuerung erfolgt dabei ebenfalls über den vorgesehenen I²C-Bus.

Der Farbdecoder 7 gibt digitalisiert YUV-Signale über den Ausgang 33 an einen Konverter ab. Dieser Konverter ist ebenfalls umschaltbar, so daß die mit einer Bildwechselfrequenz von 50 Hz anliegenden Bildsignale wahlweise in 100 Hz-Signale konvertiert werden können. Das Gleiche gilt auch für die digital anliegenden YUV-Signale über die Schnittstelle 32 vom MPEG-Decoder 6. Die Umschaltung auf 100 Hz-Wiedergabe kann dabei auch automatisch vorgesehen sein, je nachdem, welches Programm im Speicher des Bedienprozessors 35 implementiert ist.

Die konvertierten oder nicht konvertierten RGB-Signale mit Synchronsignalen werden einem Textprozessor 15 zugeführt, in welchem über eine nicht dargestellte Leitung auch die Bedienungsführungs-Programme bzw. Textprogramme, die aus einem nicht dargestellten Block eines Videotext-Decoders zugeschaltet oder anstelle der RGB-Signale eingeblendet werden können, überlagert oder einzeln dargestellt sind. Es sind also sowohl Textdarstellungen als auch Onscreen-Benutzerführungen und die reinen Femsehdarstellungen einschließlich der jeweiligen Überlagerung auf ein Fernsehbild möglich. Die Anschaltung erfolgt dabei ebenfalls wahlweise über den Bedienprozessor 35 oder über den dargestellten I²C-Bus. Die Ausgänge des Textdecoders 15 sind mit einem dynamischen RGB-Umschalter verbunden, über den es möglich ist, auch externe RGB- und Synchron-Eingänge 12 wahlweise an die Ausgänge 10 anzuschalten. Z.B. können auch von einem CD-Player oder von einem Videorecorder oder von einem PC ankommende RGB-Signale durchgeschaltet werden, um auf dem gleichen Monitor bzw. Fernsehschirm dargestellt werden zu können.

Weiterhin sieht die Einheit vor, daß über den I²C-Bus 34 auch die Funktionseinheit eines intelligenten Netzumschalters mit Stromversorgung geschaltet wird. Hierzu weist der Netzumschalter einen Netzeingang 23 auf, der wahlweise an- oder abgeschaltet werden kann, ferner einen zweiten Netzeingang, der beispielsweise von einem PC her anlegbar ist und über den Eingang 22 anliegt. Es kann also wahlweise die Stromversorgung, die über die Leitung 20, die zu allen Funktionseinheiten führt, über den Netzeingang 23 oder den Netzeingang 22 sichergestellt sein. Es ist aber auch möglich, die Umschalter des intelligenten Netzumschalters so zu schalten, daß ein PC 21 hierüber gleichzeitig eingeschaltet wird bzw. ein Monitor oder Fernsehgerät über den Ausgang 19. Dies hat den Vorteil, daß die Funktionseinheit insgesamt über ein und denselben Schalter anschaltbar ist. Synchron oder auch unabhängig davon ist der Audio-Schalter von dem Bedienteil-Prozessor 35 steuerbar.

Die erfindungsgemäße Einheit ist mannigfaltig einsetzbar und auch steuerbar, wie dies beschrieben worden ist. Sie ermöglicht redundanzfrei die Kopplung zwischen Monitor und PC, aber auch den Einsatz in Verbindung mit einem Fernsehempfänger, ja sogar die Kopplung zwischen Fernsehempfänger und PC gewissermaßen als Video- und Tonumschalter, aber auch die Nutzung in Verbindung mit einem CD-Player, gleich ob es sich dabei um einen Audio-, CD- oder Daten-Player handelt.

## Patentansprüche

1. Einrichtung mit einer abstimmbaren Empfängerschaltung zum Empfang von analogen und/oder digitalen Fernsehsignalen, die terrestrisch, über Kabel oder Satellit verteilt werden, mit folgenden Merkmalen:
- einer HF-Schnittstelle (3, 26) für die wahlweise Einspeisung von analogen und/oder digitalen Signalen von einer terrestrischen Satellitenantenne und/oder einer Kabelverteilanlage in die Empfängerschaltungen (1, 2);
- einem Signaldecoder (7) mit digitaler Signalverarbeitungsschaltung, und A/D-Wandler, der analoge Signale in digitale Y-, U- und V-Signale umsetzt;
- einem Signaldecoder (6) für die digital übertragenen Fernsehsignale nach deren Demodulation;
- einer digitalen Signalverarbeitungsschaltung (8), die mit einer bestimmten Zeilenzahl anliegender Videosignale eines Bildes von den analogen und/oder digitalen Signalquellen in ein Bild mit höherer Zeilenzahl konvertiert;
- einem Audiodecoder (6, 18), der die empfangenen von der analogen und/oder digitalen Signalquelle anliegenden Audiosignale decodiert und als NF-Signale über einen dynamischen Audio-Umschalter (14) an einen NF-Ausgang (11) abgibt,
**gekennzeichnet durch**
- einen nachgeschalteten Analogwandler, der die konvertierten oder unkonvertierten Signale als RGB-Signale ausgibt, die über einen dynamischen Umschalter (9) zusammen mit Synchronimpulsen an die RGB-S-Schnittstelle (10) ausgebbar sind, welche Schnittstelle über den dynamischen Umschalter (9) mit einer weiteren RGB-S-Eingangsschnittstelle (12) wahlweise verbindbar ist;
- einen Audiodecoder (6, 18), welcher über den dynamischen Audio-Umschalter (14) an einen NF-Eingang (13) wahlweise anschaltbar ist;
- wobei die Steuerung der dynamischen Umschalter (9, 14) der Abstimmschaltungen (1, 2) und der weiteren zu steuernden Funktionseinheiten busgesteuert von einem µController (35), der seinerseits über eine Empfangsschnittstelle (24) mittels empfangener Infrarotlichtsignale und/oder über einen weiteren Bus-Ein/Ausgang (25) von einem externen PC steuerbar ist, erfolgt;
- und ein intelligenter Netzumschalter (37) zur wahlweisen Speisung aus einem Stromversorgungsnetz (23) oder einem PC (22) vorgesehen ist, der von dem µController (35) wahlweise oder **durch** Schließen der Steckkontakte zwangsweise umschaltet.

2. Einrichtung nach Anspruch 1, **dadurch gekennzeichnet, daß** mit dem Netzumschalter (37) mindestens ein netzstromführender Ausgang (21, 19) ständig oder wahlweise eingeschaltet verbunden ist.

3. Einrichtung nach Anspruch 1, **dadurch gekennzeichnet, daß** am Ausgang der Empfängerschaltung (2) für das analoge FS-Signal das analoge FBAS-Signal über eine weitere Schnittstelle (4) von einem Anschluß des Gerätes abgreifbar ist.

4. Einrichtung nach Anspruch 1, **dadurch gekennzeichnet, daß** eine digitale Schnittstelle (28) hinter dem Farbdecoder (7) vorgesehen ist, von welchem die digitalen YUV-Signale abgreifbar sind.

5. Einrichtung nach einem der vorhergehenden Ansprüche, **dadurch gekennzeichnet, daß** ein Textprozessor (19) vorgesehen ist, der mit den empfangenen Signalen übertragene Texte decodiert und/oder die Generierung von Texten prozessorgesteuert erzeugt, die gemischt mit den RGB-Signalen oder allein als RGB-Signale an den Ausgängen anliegen.

6. Einrichtung nach Anspruch 1, **dadurch gekennzeichnet, daß** die RGB-S-Ausgänge (10) mit entsprechenden Eingängen eines Monitors oder Fernsehempfängers und die RGB-Eingänge mit den RGB-Ausgängen eines PC verbindbar sind.

7. Einrichtung nach Anspruch 1, **dadurch gekennzeichnet, daß** die NF-Ausgänge (11) mit Aktivlautsprechern verbunden sind.

8. Einrichtung nach Anspruch 7, **dadurch gekennzeichnet, daß** der angeschlossene Monitor ein Multisync-Monitor ist.

9. Einrichtung nach Anspruch 1, **dadurch gekennzeichnet, daß** die Einrichtung als Adaptionsgerät zu einem PC eingesetzt ist.

10. Einrichtung nach Anspruch 1, **dadurch gekennzeichnet, daß** getrennte Empfängerschaltungen (1, 2) für digitale und analoge Signale vorgesehen sind.

11. Einrichtung nach Anspruch 1, **dadurch gekennzeichnet, daß** als Bussteuerung ein I²C-Bus vorgesehen ist.

12. Einrichtung nach Anspruch 1 oder 9, **dadurch gekennzeichnet, daß** vor und/oder hinter dem Signaldecoder (6) für die digitalen FS- und/oder AudioSignale eine weitere Schnittstelle (27) zum Einspeisen und/oder Auslesen der digitalen Signale durch ein externes Gerät vorgesehen ist.

13. Einrichtung nach Anspruch 12, **dadurch gekennzeichnet, daß** bei Einspeisung eines digitalen Audio/Videosignals in den Decoder (6) das Empfangssignal vom Empfänger abgeschaltet ist.

14. Einrichtung nach Anspruch 13, **dadurch gekennzeichnet, daß** der Schalter ein Transport-Demultiplexer (5) ist.

## Claims

1. Device with a tunable receiver circuit for reception of analog and/or digital television signals, which are distributed terrestrially, by way of cable or satellite, with the following features:
- a high-frequency interface (3, 26) for selectable feeding of analog and/or digital signals from a terrestrial antenna or a satellite antenna and/or cable distributor installation into the receiver circuits (1, 2);
- a signal decoder (7) with a digital signal processing circuit, and an analog-to-digital converter which converts analog signals into digital Y, U and V signals;
- a signal decoder (6) for the digitally transmitted television signals after demodulation thereof;
- a digital signal processing circuit (8) which converts video signals, which have a specific definition, of an image from the analog and/or digital signal sources into an image with a higher definition; and
- an audio decoder (6, 18) which decodes the received audio signals, which are from the analog and/or digital signal source, and issues them as low-frequency signals by way of a dynamic audio changeover switch (14) at a low-frequency output (11),
**characterised by**
- a downstream analog converter which issues the converted or unconverted signals as RGB signals able to be output by way of a dynamic changeover switch (9) together with synchronising pulses to the RGB-S interface (10), which interface is selectably connectible by way of the dynamic changeover switch (9) with a further RGB-S input interface (12);
- an audio decoder (6, 18) selectably connectible by way of the dynamic audio changeover switch (14) with a low-frequency input (13);
- wherein the control of the dynamic changeover switch (9, 14) of the tuning circuits (1, 2) and the further functional units, which are to be controlled, is carried out in bus-controlled manner by a microcontroller (35), which is in turn controllable by way of a reception interface (24) by means of received infrared light signals and/or by way of a further bus input/output (25) from an external PC; and
- an intelligent mains changeover switch (37) for selectable current supply from a current supply mains (23) or a PC (22), which is selectably switched over by the microcontroller (35) or constrainedly switched over by closing the plug contacts.

2. Device according to claim 1, **characterised in that** at least one output (21, 19) conducting mains current is connected with the mains changeover switch (37) constantly or to be selectably switched on.

3. Device according to claim 1, **characterised in that** the analog FBAS signal can be tapped at the output of the receiver circuit (2) for the analog FS signal by way of a further interface (4) from a terminal of the apparatus.

4. Device according to claim 1, **characterised in that** a digital interface (28) is provided behind the colour decoder (7), from which the digital YUV signals can be tapped.

5. Device according to one of the preceding claims, **characterised in that** a text processor (19) is provided, which decodes text transmitted with the received signals and/or in processor-controlled manner produces the generation of texts, which are present mixed with the RGB signals or solely as RGB signals at the outputs.

6. Device according to claim 1, **characterised in that** the RGB-S outputs (10) are connectible with corresponding inputs of a monitor or television receiver and the RGB inputs are connected with the RGB outputs of a PC.

7. Device according to claim 1, **characterised in that** the low-frequency outputs (11) are connected with active loudspeakers.

8. Device according to claim 7, **characterised in that** the connected monitor is a multisync monitor.

9. Device according to claim 1, **characterised in that** the device is used as an adaptation apparatus relative to a PC.

10. Device according to claim 1, **characterised in that** separate receiver circuits (1, 2) are provided for digital and analog signals.

11. Device according to claim 1, **characterised in that** an I²C bus is provided as bus control.

12. Device according to claim 1 or 9, **characterised in that** a further interface (27) for supplying and/or reading-out the digital signals by an external apparatus is provided in front of and/or behind the signal decoder (6) for the digital FS and/or audio signals.

13. Device according to claim 12, **characterised in that** the received signal of the receiver is switched off when a digital audio/video signal is fed into the decoder (6).

14. Device according to claim 13, **characterised in that** the switch is a transport demultiplexer (5).

## Revendications

1. Dispositif avec un circuit de réception réglable pour la réception de signaux de télévision analogiques et/ou numériques distribués par voie terrestre, par câble ou par satellite, présentant les composants suivants :
- une interface HF (3, 26) pour la transmission sélective de signaux analogiques et/ou numériques depuis une antenne terrestre, une antenne satellite et/ou un répartiteur de câble vers les circuits de réception (1, 2) ;
- un décodeur de signaux (7) avec un circuit de traitement des signaux numériques et un convertisseur analogique-numérique, qui convertit les signaux analogiques en signaux Y, U et V numériques ;
- un décodeur de signaux (6) pour les signaux de télévision transmis sous forme numérique après la démodulation de ceux-ci ;
- un circuit de traitement des signaux numériques (8) qui convertit des signaux vidéo comprenant un certain nombre de lignes d'une image provenant des sources de signaux analogiques et/ou numériques en une image ayant un plus grand nombre de lignes ;
- un décodeur audio (6, 18) qui décode les signaux audio reçus en provenance de la source de signaux analogique et/ou numérique et les transmet sous la forme de signaux BF à une sortie BF (11) par l'intermédiaire d'un commutateur audio dynamique (14),
**caractérisé en ce qu'**il comprend :
- un convertisseur analogique monté en aval, qui émet les signaux convertis ou non convertis sous la forme de signaux RVB qui peuvent être transmis à l'interface RVB/S (10) en passant par un commutateur dynamique (9) en même temps que des impulsions de synchronisation, laquelle interface peut être mise sélectivement en communication avec une autre interface d'entrée RVB/S (12) par l'intermédiaire du commutateur dynamique (9) ;
- un décodeur audio (6, 18) qui peut être connecté sélectivement à une entrée BF (13) par l'intermédiaire du commutateur audio dynamique (14) ;
- la commande des commutateurs dynamiques (9, 14) des circuits de réglage (1, 2) et des autres unités fonctionnelles à commander étant régulée par un bus à l'aide d'un microcontrôleur (35) qui peut être commandé pour sa part via une interface de réception (24) par un PC externe au moyen de signaux infrarouges captés et/ou d'une autre entrée/sortie de bus (25) ;
- et un commutateur de réseau intelligent (37) étant prévu pour l'alimentation sélective à partir d'un réseau d'alimentation électrique (23) ou d'un PC (22), et commutant sélectivement à partir du microcontrôleur (35) ou par fermeture des contacts à enfichage.

2. Dispositif selon la revendication 1, **caractérisé en ce qu'**au moins une entrée acheminant le courant du réseau (21, 19) peut être raccordée au commutateur de réseau (37) en étant constamment ou sélectivement activée.

3. Dispositif selon la revendication 1, **caractérisé en ce que** le signal analogique FBAS peut être capté à la sortie du circuit de réception (2) du signal de télévision analogique par l'intermédiaire d'une autre interface (4) d'un branchement de l'appareil.

4. Dispositif selon la revendication 1, **caractérisé en ce qu'**il est prévu une interface numérique (28) après le décodeur de couleurs (7), qui peut capter les signaux numériques YUV.

5. Dispositif selon l'une ou l'ensemble des revendications précédentes, **caractérisé en ce qu'**il est prévu un processeur de texte (19) qui décode des textes transmis avec les signaux reçus et/ou provoque la production, sous le contrôle du processeur, de textes qui se présentent aux sorties en mélange avec les signaux RVB ou seuls sous la forme de signaux RVB.

6. Dispositif selon la revendication 1, **caractérisé en ce que** les sorties RVB/S (10) peuvent être mises en communication avec des entrées correspondantes d'un moniteur ou d'un récepteur de télévision et les entrées RVB avec les sorties RVB d'un PC.

7. Dispositif selon la revendication 1, **caractérisé en ce que** les sorties BF (11) peuvent être mises en communication avec des haut-parleurs actifs.

8. Dispositif selon la revendication 7, **caractérisé en ce que** le moniteur connecté est un moniteur Multisync.

9. Dispositif selon la revendication 1, **caractérisé en ce qu'**il est utilisé comme adaptateur sur un PC.

10. Dispositif selon la revendication 1, **caractérisé en ce que** des circuits de réception séparés (1, 2) sont prévus pour les signaux numériques et analogiques.

11. Dispositif selon la revendication 1, **caractérisé en ce qu'**un bus I²C est prévu pour la commande par bus.

12. Dispositif selon la revendication 1 ou 9, **caractérisé en ce qu'**il est prévu avant et/ou après le décodeur de signaux (6) pour les signaux numériques de télévision et/ou audio, une autre interface (27) pour la transmission et/ou la lecture des signaux numériques par un appareil externe.

13. Dispositif selon la revendication 12, **caractérisé en ce que** lors de la transmission d'un signal audio/vidéo numérique dans le décodeur (6), le signal de réception du récepteur est désactivé.

14. Dispositif selon la revendication 13, **caractérisé en ce que** le commutateur est un démultiplexeur de transport (5).
